(19) Europäisches Patentamt
European Patent Office
Office européen des brevets

(11) EP 0 937 499 B1

# (12) FASCICULE DE BREVET EUROPEEN

(45) Date de publication et mention
de la délivrance du brevet:
**14.01.2004 Bulletin 2004/03**

(51) Int Cl.$^7$: **B01J 29/06**, B01J 29/78,
C01B 39/48, C10G 47/16

(21) Numéro de dépôt: **99400388.7**

(22) Date de dépôt: **17.02.1999**

(54) **Catalyseur comprenant une zeolithe NU-88 et son utilisation en hydroconversion de charges pétrolières hydrocarbonées**

Zeolith NU-88 enthaltenden Katalysator und ihre Verwendung zur Umwandlung von Erdöleinsätzen

Catalyst containing NU-88 zeolite and its use in hydroconversion of petroleum feedstocks

(84) Etats contractants désignés:
**DE ES GB IT NL**

(30) Priorité: **20.02.1998 FR 9802103**

(43) Date de publication de la demande:
**25.08.1999 Bulletin 1999/34**

(73) Titulaire: **Institut Français du Pétrole
92852 Rueil-Malmaison Cedex (FR)**

(72) Inventeurs:
- **Benazzi, Eric
78400 Chatou (FR)**
- **George-Marchal, Nathalie
69230 Saint Genis Laval (FR)**
- **Kasztelan, Slavik
92500 Rueil Malmaison (FR)**

(56) Documents cités:
**EP-A- 0 825 152** **US-A- 4 557 919**
**US-A- 5 641 393**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 937 499 B1

Printed by Jouve, 75001 PARIS (FR)

## Description

La présente invention concerne un catalyseur d'hydrocraquage renfermant au moins une matrice, une zéolithe NU-88, au moins un métal choisi dans le groupe formé par les métaux du groupe VIB et du groupe VIII de la classification périodique, au moins un élément choisi dans le groupe formé par le phosphore, le bore et le silicium, éventuellement au moins un élément du groupe VIIA, et éventuellement au moins un élément du groupe VIIB. L'invention concerne également l'utilisation de ce catalyseur en hydrocraquage des charges hydrocarbonées.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellentes bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390°C), et à vitesse spatiale d'alimentation faible (la VVH exprimée en volume de charge à traiter par unité de volume de catalyseur et par heure est généralement inférieure ou égale à 2 $h^{-1}$) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant de la zéolithe Y de type structural FAU, ou les catalyseurs de type bêta présentent quant à eux une activité catalytique supérieure à celle des silice-alumines amorphes, mais présentent dès sélectivités en produits légers qui sont plus élevées.

La demande de brevet EP-A-0 825 152 décrit la Zéolithe NU-88 et sa composition, ainsi que la composition d'un catalyseur comportant une telle Zéolithe.

Les travaux de recherche effectués par le demandeur sur de nombreuses zéolithes et solides microporeux cristallisés l'ont conduit à découvrir que. de façon surprenante, un catalyseur contenant au moins une zéolithe NU-88 permet d'atteindre une activité catalytique et des sélectivités en kérosène et en essence nettement améliorées par rapport aux catalyseurs contenant une zéolithe connus dans l'art antérieur.

Plus précisément, l'invention a pour objet une composition comprenant au moins une matrice, au moins un élément choisi dans le groupe formé par les éléments du groupe VIII et du groupe VIB et au moins un élément promoteur choisi dans le groupe formé par le bore, le silicium et le phosphore, ledit catalyseur étant caractérisé en ce qu'il contient une zéolithe NU-88.

La zéolithe NU-88 utilisée dans la présente invention est caractérisée par :

- i) une composition chimique exprimée sur une base anhydre, en termes de rapports molaires d'oxydes, par la formule :

$$100\ XO_2,\ m\ Y_2O_3.\ p\ R_{2/n}O,$$

où m est égal ou inférieur à 10, p est égal ou inférieur à 20, R représente un ou plusieurs cations de valence n, X est le silicium et/ou le germanium, de préférence le silicium, Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, de préférence Y est l'aluminium. et

- ii) le fait qu'elle présente, sous forme brute de synthèse, un diagramme de diffraction X comportant les résultats présentés dans le tableau 1.

Tableau 1 :

| Tableau de diffraction des rayons X de la zéolithe NU-88 (brute de synthèse) | |
|---|---|
| $d_{hkl}$ ($10^{-10}$m) | $I/I_{max}$ |
| 12,1±0,35<br>11,0±0,30 | F ou TF(1)<br>F (1) |
| 9,88±0,25<br>6,17±0,15 | m (1)<br>f |
| 3,97±0,09<br>3,90±0,08 | TF(2)<br>TF (2) |
| 3,80±0,08<br>3,66±0,07 | f (2)<br>tf |
| 3,52±0,07<br>3,27±0,07 | tf<br>tf |
| 3,09±0,06<br>2,91±0,06 | f<br>f |
| 2,68±0,06<br>2,49±0,05 | tf<br>tf |
| 2,20±0,05<br>2,059±0,05 | tf<br>f |
| 1,729±0,04 | tf |

(1) Ces pics ne sont pas résolus et font partie d'un même massif.
(2) Ces pics ne sont pas résolus et font partie du même massif.

L'invention concerne aussi la zéolithe NU-88 sous forme hydrogène, désignée par H-NU-88, produite par calcination et/ou échange d'ion comme décrit ci-après. La zéolithe H-NU-88 a un diagramme de diffraction X comportant les résultats présentés dans le tableau 2.

Tableau 2 :

| Tableau de diffraction des rayons X de la zéolithe NU-88 (forme hydrogène) | |
|---|---|
| $d_{hkl}$ ($10^{-10}$m) | $I/I_{max}$ |
| 12,1±0,35<br>11,0±0,30 | TF(1)<br>F ou TF (1) |

(1) Ces pics ne sont pas résolus et font partie d'un même massif.

Tableau 2 : (suite)

| Tableau de diffraction des rayons X de la zéolithe NU-88 (forme hydrogène) | |
|---|---|
| $d_{hkl}$ ($10^{-10}$m) | $I/I_{max}$ |
| 9,92±0,25<br>8,83±0,20 | f ou m (1)<br>tf |
| 6,17±0,15<br>3,99±0,10 | f<br>F ou TF (2) |
| 3,91±0,08<br>3,79±0,08 | TF (2)<br>f ou m (2) |
| 3,67±0,07<br>3,52±0,07 | tf<br>tf |
| 3,09±0,06<br>2,90±0,06 | f<br>f |
| 2,48±0,05<br>2,065±0,05 | f<br>f |
| 1,885±0,04<br>1,733±0,04 | tf<br>tf |

(1) Ces pics ne sont pas résolus et font partie d'un même massif.
(2) Ces pics ne sont pas résolus et font partie du même massif.

Ces diagrammes sont obtenus à l'aide d'un diffractomètre en utilisant la méthode classique des poudres avec le rayonnement Kα du cuivre Cu K alpha. A partir de la position des pics de diffraction représentée par l'angle 2θ, on calcule, par la relation de Bragg, les équidistances réticulaires $d_{hkl}$ caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X, et alors :

très faible (tf) signifie inférieure à 10,
faible (f) signifie inférieure à 20,
moyenne (m) signifie comprise entre 20 et 40,
forte, (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements. ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

On estime que la zéolithe NU-88 possède une nouvelle structure de base ou topologie qui est caractérisée par son diagramme de diffraction X. La zéolithe NU-88 sous sa "forme brute de synthèse" possède sensiblement les caractéristiques obtenues par diffraction X, présentées dans le tableau 1, et se distingue ainsi des zéolithes connues. L'objet de l'invention comprend aussi toute zéolithe de même type structural que celui de la zéolithe NU-88.

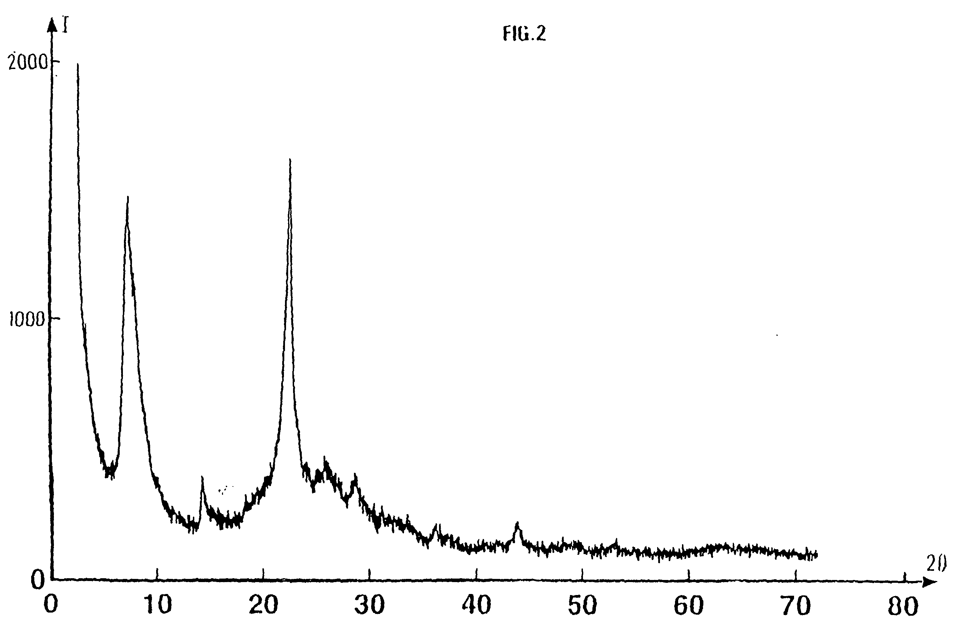

Les tableaux 1 et 2 et les diffractogrammes des figures 1 et 2 sont relativement peu habituels pour des structures zéolithiques. Par conséquent, ces données semblent indiquer que la zéolithe NU-88 présente une structure à défaut.

Dans le cadre de la définition de la composition chimique donnée ci-dessus, m est généralement compris entre 0,1 et 10, de préférence entre 0,2 et 9, et de façon encore plus préférée entre 0,6 et 8 ; il apparait que la zéolithe NU-88 s'obtient généralement le plus aisément sous une forme très pure lorsque m est compris entre 0,6 et 8.

Cette définition englobe également la zéolithe NU-88 sous sa "forme brute de synthèse", ainsi que des formes obtenues par déshydratation et/ou calcination et/ou échange d'ions. L'expression "sous sa forme brute de synthèse" désigne le produit obtenu par synthèse et par lavage avec ou sans séchage ou déshydratation. Sous sa "forme brute

de synthèse", la zéolithe NU-88 peut comporter un cation de métal M. qui est un alcalin , notamment du sodium, et/ou de l'ammonium, et elle peut comporter des cations organiques azotés tels que ceux décrits ci-après ou leurs produits de décomposition, ou encore leurs précurseurs. Ces cations organiques azotés sont désignés ici par la lettre Q, qui inclut aussi les produits de décomposition et les précurseurs desdits cations organiques azotés.

Ainsi, la zéolithe NU-88, sous sa forme "brute de synthèse" (non calcinée), est caractérisée par :

i) une composition chimique exprimée sur une base anhydre, en termes de rapports molaires d'oxydes :

100 $XO_2$ : inférieur ou égal à 10 $Y_2O_3$ : inférieur ou égal à 10 Q : inférieur ou égal à 10 $M_2O$,
où X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse,
M est au moins un cation de métal alcalin (groupe IA de la Classification Périodique des Eléments) et/ou l'ammonium, et
Q est au moins un cation organique azoté ou un précurseur de cation organique azoté ou un produit de décomposition de cation organique azoté.

ii) le fait qu'elle présente, sous forme brute de synthèse, un diagramme de diffraction X comportant les résultats présentés dans le tableau 1

Les compositions indiquées ci-dessus pour la zéolithe NU-88 sont données sur une base anhydre, bien que la zéolithe NU-88 sous sa "forme brute de synthèse" et les formes activées de la zéolithe NU-88, c'est-à-dire résultant d'une calcination et/ou d'un échange d'ions, puissent contenir de l'eau. La teneur molaire en $H_2O$ de telles formes, y compris la zéolithe NU-88 sous sa "forme brute de synthèse", varie selon les conditions dans lesquelles elles ont été préparées et conservées après synthèse ou activation. Les quantités molaires d'eau contenue dans ces formes sont typiquement comprises entre 0 et 100% $XO_2$.

Les formes calcinées de la zéolithe NU-88 ne contiennent pas de composé organique azoté, ou en quantité moindre que la "forme brute de synthèse", dans la mesure où la substance organique est éliminée en majeure partie, généralement par un traitement thermique consistant à brûler la substance organique en présence d'air, l'ion hydrogène ($H^+$) formant alors l'autre cation.

Ainsi la zéolithe Nu-88, sous sa forme hydrogène, est caractérisée par :

i) une composition chimique suivante exprimée sur une base anhydre, en termes de rapports molaires d'oxydes :

100$XO_2$: inférieur ou égal à 10 $Y_2O_3$ inférieur ou égal à 10 $M_2O$, où
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et
M est au moins un cation de métal alcalin (groupe IA de la Classification Périodique des Eléments) et/ou l'ammonium et/ou l'hydrogène,

ii) le fait qu'elle présente, sous forme hydrogène, un diagramme de diffraction X comportant les résultats présentés dans le tableau 2.

Parmi les formes de zéolithe NU-88 obtenues par échange d'ions, la forme ammonium ($NH_4^+$) est importante car elle peut être facilement convertie sous la forme hydrogène par calcination. La forme hydrogène et les formes contenant des métaux introduits par échange d'ions sont décrites ci-dessous. Dans certains cas, le fait de soumettre la zéolithe selon l'invention à l'action d'un acide peut donner lieu à l'élimination partielle ou totale d'un élément de base tel que l'aluminium, ainsi que la génération de forme hydrogène. Ceci peut constituer un moyen de modifier la composition de la substance de la zéolithe après qu'elle a été synthétisée.

La zéolithe NU-88 sous forme hydrogène (forme acide). appelée H-NU-88, est produite par calcination et par échange d'ions comme décrit ci-après.

La zéolithe NU-88 au moins en partie sous forme $H^+$ (telle que définie ci-dessus) ou $NH_4^-$ ou métallique, ledit métal étant choisi dans le groupe formé par les groupes IA, IB, IIA, IIB, IIIA, IIIB (y compris les terres rares), VIII, Sn, Pb et Si, de préférence au moins en partie sous forme $H^+$ ou au moins en partie sous forme métallique, peut aussi être utilisée. Une telle zéolithe présente généralement un diagramme de diffraction X comportant les résultats présentés dans le tableau 1.

On emploiera de préférence la zéolithe NU-88 au moins en partie sous forme acide (et de préférence en

totalité sous forme H) ou partiellement échangée avec des cations métalliques, par exemple des cations des métaux alcalino-terreux.

Les zéolithes NU-88 qui entrent dans la composition selon l'invention sont utilisées avec les teneurs en silicium et aluminium obtenues à la synthèse.

Le catalyseur, caractérisé en ce qu'il comprend au moins une zéolithe NU-88 renferme en outre une fonction hydrogénante. La fonction hydrogénante telle qu'elle a été définie précédemment, comporte au moins un métal choisi dans le groupe formé par les métaux du groupe VIB et du groupe VIII de la classification périodique des éléments.

Le catalyseur de la présente invention peut renfermer un élément du groupe VIII tel que fer, cobalt, nickel, ruthénium, rhodium, palladium, osmium, iridium ou platine. Parmi les métaux du groupe VIII on préfère employer les métaux non nobles tels que fer, cobalt, nickel. Le catalyseur selon l'invention peut renfermer un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, nickel-tungstène. Il est également possible d'utiliser des associations de trois métaux par exemple nickel-cobalt-molybdène.

Le catalyseur de la présente invention renferme également au moins une matrice minérale poreuse amorphe ou mal cristallisée de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

Le catalyseur de la présente invention renferme également au moins un élément promoteur choisi dans le groupe formé par le bore. le silicium et le phosphore. Le catalyseur renferme éventuellement au moins un élément du groupe VIIA, de préférence le chlore et le fluor, et encore éventuellement au moins un élément du groupe VIIB.

Lorsque le catalyseur contient du silicium, le silicium est introduit à titre de promoteur sur le support selon l'invention. Le silicium est principalement localisé sur la matrice du support et peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique.

Le catalyseur de la présente invention renferme généralement en % poids par rapport à la masse totale du catalyseur :

- 0,1 à 60%, de préférence de 0,1 à 50% et de manière encore plus préférée de 0,1 à 40% d'au moins un métal choisi dans le groupe formé par les métaux du groupe VIB et du groupe VIII,
- 0,1 à 99%, de préférence de 1 à 98% d'au moins une matrice minérale poreuse amorphe ou mal cristallisée de type oxyde

ledit catalyseur étant caractérisé en ce qu'il renferme de 0,1 à 99,8%, de préférence de 0,1 à 90%, de préférence de 0,1 à 80% et de manière encore plus préférée de 0,1 à 60% de zéolithe NU-88,
ledit catalyseur renfermant

- de 0,1 à 15% et de manière préférée de 0,1 à 10% d'au moins un élément promoteur choisi dans le groupe formé par le silicium, le bore et le phosphore.
- 0 à 20%, de préférence de 0,1 à 15% et de manière encore plus préférée de 0,1 à 10% d'au moins un élément choisi dans le groupe VIIA, de préférence le fluor.
- 0 à 20%, de préférence de 0,1 à 15% et de manière encore plus préférée de 0,1 à 10% d'au moins un élément choisi dans le groupe VIIB.

Les métaux du groupe VIB, du groupe VIII et du groupe VIIB du catalyseur de la présente invention peuvent être présent en totalité ou partiellement sous la forme métallique et/ou oxyde et/ou sulfure.

Ce catalyseur peut être préparé par toutes les méthodes bien connues de l'homme du métier. Avantageusement, il est obtenu par mélange de la matrice et de la zéolithe puis le mélange est mis en forme. L'élément hydrogénant est introduit lors du mélange, ou de manière préférée après mise en forme. La mise en forme est suivie d'une calcination, l'élément hydrogénant est introduit avant ou après cette calcination. La préparation se termine par une calcination à une température de 250 à 600°C. Une des méthodes préférées selon la présente invention consiste à malaxer la poudre de zéolithe NU-88 dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante peut être introduite en partie seulement (cas, par exemple, des associations d'oxydes de métaux des groupes VIB et VIII) ou en totalité au moment du malaxage de la zéolithe, c'est à dire la zéolithe NU-88, avec le gel d'oxyde choisi comme matrice.

La fonction hydrogénante peut être introduite par une ou plusieurs opérations d'échange ionique sur le support

calciné constitué d'une zéolithe NU-88, dispersée dans la matrice choisie, à l'aide de solutions contenant les sels précurseurs des métaux choisis.

La fonction hydrogénante peut être introduite par une ou plusieurs opérations d'imprégnation du support mis en forme et calciné, par une solution contenant au moins un précurseur d'au moins un oxyde d'au moins un métal choisi dans le groupe formé par les métaux du groupes VIII et les métaux du groupe VIB, le(s) précurseur(s) d'au moins un oxyde d'au moins un métal du groupe VIII étant de préférence introduit(s) après ceux du groupe VIB ou en même temps que ces derniers, si le catalyseurs contient au moins un métal du groupe VIB et au moins un métal du groupe VIII.

Dans le cas où le catalyseur contient au moins un élément du groupe VIB par exemple le molybdène, il est par exemple possible d'imprégner le catalyseur avec une solution contenant au moins un élément du groupe VIB, de sécher, de calciner. L'imprégnation du molybdène peut être facilitée par ajout d'acide phosphorique dans les solutions de paramolybdate d'ammonium, ce qui permet d'introduire aussi le phosphore de façon à promouvoir l'activité catalytique.

Le catalyseur contient à titre de promoteur au moins un élément choisi parmi le silicium, le bore et le phosphore. Ces éléments sont introduits sur un support contenant déjà au moins une zéolithe NU-88, au moins une matrice, comme définie ci-avant, et au moins un métal choisi dans le groupe formé par les métaux du groupe VIB et les métaux du groupe VIII.

Dans le cas où le catalyseur contient du bore, du silicium et du phosphore et éventuellement l'élément choisi dans le groupe VIIA des ions halogénures et éventuellement au moins un élément choisi dans le groupe VIIB, ces éléments peuvent être introduits dans le catalyseur à divers niveaux de la préparation et de diverses manières.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le P, B, Si et l'élément choisi parmi les ions halogénures du groupe VIIA, peuvent être introduits par une ou plusieurs opérations d'imprégnation avec excès de solution sur le précurseur calciné.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on rempli le volume des pores du précurseur par la solution contenant le bore.

Dans le cas où le catalyseur contient du silicium, on utilisera une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple dans le cas où par exemple le précurseur est un catalyseur de type nickel-molybdène supporté sur un support contenant de la zéolithe NU-88 et de l'alumine, il est possible d'imprégner ce précurseur par de la solution aqueuse de biborate d'ammonium et de silicone Rhodorsil E1 P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

Dans le cas où le catalyseur contient au moins un élément du groupe VIIA, de préférence le fluor, il est par exemple possible d'imprégner le catalyseur par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Dans le cas où le catalyseur contient du phosphore, il est par exemple possible d'imprégner le catalyseur avec une solution contenant du phosphore, de sécher, de calciner.

Dans le cas où les éléments contenus dans le catalyseur, c'est à dire au moins un métal choisi dans le groupe formé par les métaux du groupe VIII et du groupe VIB, éventuellement le bore, le silicium, le phosphore, au moins un élément du groupe VIIA, au moins un élément du groupe VIIB, sont introduits en plusieurs imprégnations des sels précurseurs correspondants, une étape de séchage intermédiaire du catalyseur est généralement effectuée à une température généralement comprise entre 60 et 250°C et une étape de calcination intermédiaire du catalyseur est généralement effectuée à une température comprise entre 250 et 600°C.

Afin de terminer la préparation du catalyseur, on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides

molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si $(OEt)_4$, les siloxanes, les polysiloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins. l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2$ $SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIIB qui peuvent être utilisées sont bien connues de l'homme du métier. On utilise de préférence les sels d'ammonium, les nitrates et les chlorures.

Les catalyseurs ainsi obtenus, sous forme oxydes, peuvent éventuellement être amenés au moins en partie sous forme métallique ou sulfure.

Les cataiyseurs obtenus par la présente invention sont mise en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett. Teller, J. Am. Chem. Soc.. vol. 60, 309-316 (1938)) comprise entre 50 et 600 $m^2/g$, un volume poreux mesuré par porosimétrie au mercure compris entre 0.2 et 1,5 $cm^3/g$ et une distribution en taille de pores pouvant être monomodale, bimodale ou polymodale.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés

et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0.1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargées en soufre et azote.

Dans un premier mode de réalisation ou d'hydrocraquage partiel encore appellé hydrocraquage doux, le niveau de conversion est inférieur à 55%. Le catalyseur selon l'invention est alors employé à une température en général supérieure ou égale à 230°C et de préférence à 300°C, généralement d'au plus 480°C, et souvent comprise entre 350°C et 450°C. La pression est en général supérieure à 2 MPa et de préférence 3 MPa, elle est inférieure à 12 MPa et de préférence inférieure à 10 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10 $h^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le procédé est effectué en deux étapes, le catalyseur de la présente invention étant employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460°C, de préférence 360-450°C, une pression totale d'au moins 2 MPa; et de préférence 3 MPa, une vitesse volumique horaire de 0,1-5 $h^{-1}$ et de préférence 0.2-2 $h^{-1}$ et avec une quantité d'hydrogène d'au moins 100Nl/Nl de charge, et de préférence 260-3000 Nl/Nl de charge.

Pour l'étape de conversion avec le catalyseur selon l'invention (ou seconde étape), les températures sont en général supérieures ou égales à 230°C et souvent comprises entre 300°C et 480°C, de préférence entre 330° C et 450° C. La pression est en général d'au moins 2 MPa et de préférence 3 MPa, elle est inférieure à 12 MPa et de préférence inférieure à 10 MPa. La quantité d'hydrogène est au minimum de 100 l/l de charge et souvent comprise entre 200 et 3000 l/l d'hydrogène par litre de charge. La vitesse volumique horaire est comprise en général entre 0,15 et 10 $h^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la piage de pression modérée.

Dans un autre mode de réalisation en deux étapes, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison. choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460°C, de préférence 360-450°C, une pression supérieure à 3MPa. une vitesse volumique horaire de 0.1-5 $h^{-1}$ et de préférence 0.2-2 $h^{-1}$ et avec une quantité d'hydrogène d'au moins 100 Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 480°C et de préférence entre 300° C et 440° C. La pression est en général supérieure à 5 MPa et de préférence supérieure à 7 MPa. La quantité d'hydrogène est au minimum de 100 l/l de charge et souvent comprise entre 200 et 3000 l/l d'hydrogène par litre de charge. La vitesse volumique horaire est comprise en général entre 0,15 et 10 $h^{-1}$.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Les exemples suivants illustrent la présente invention sans toutefois en limiter la portée.

<u>Exemple 1 : Préparation d'un support de catalyseur d'hydrocraquage contenant une zéolithe NU-88</u>

La zéolithe NU-88 est synthétisée à partir de l'hexane-1,6-bis (méthyl-pyrrolidinium) bromure (HexPyrr). La structure de l'hexane-1,6-bis(méthylpyrrolidinium) bromure (HexPyrr) est la suivante :

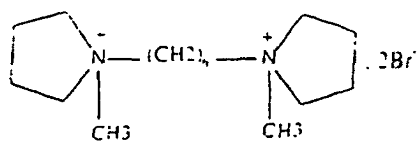

Un mélange réactionnel de composition molaire 60 $SiO_2$ : 2 $Al_2O_3$ : 10 $Na_2O$ : 10 HexPyrr : 3000 $H_2O$ a été préparé à partir de :

- 48,07 g de "CAB-O-SIL" (BOH Ltd)
- 12,303 g de solution SoAl 235 (Laroche) (composition en % poids : 22,10 % $Al_2O_3$ ; 20,40 % $Na_2O$ ; 57,50 % $H_2O$)
- 7,4 g de pastilles d'hydroxyde de sodium
- 57,2 g de HexPyrr (composition en % poids : 96,50 % HexPyrr; 3.50 % $H_2O$)
- 709 g d'eau.

Le mélange a été préparé selon le mode opératoire suivant :

A - solution contenant l'hydroxyde de sodium et de l'aluminate de sodium dans de l'eau (approximativement 200 g)
B - solution contenant l'HexPyrr dans de l'eau (approximativement 150 g)
C - dispersion du CAB-O-SIL dans l'eau restante.

La solution A a été ajoutée à la dispersion C sous agitation; la solution B a ensuite été ajoutée. L'agitation a été poursuivie jusqu'à obtention d'un gel homogène. Le mélange obtenu a ensuite été transféré dans un autoclave en acier inoxydable d'une capacité de 1 litre. Le mélange a été porté à une température de 160°C. Cette température a été maintenue pendant toute la durée de la réaction. De plus, le mélange a été maintenu sous agitation à l'aide d'un agitateur à palettes inclinées.

Des échantillons du mélange réactionnel ont été régulièrement prélevés et le déroulement de la réaction a été surveillé par l'intermédiaire du pH. Après 13 jours à 160°C, la température du mélange réactionnel a été brusquement abaissée à la température ambiante et le produit a été évacué. La substance a ensuite été filtrée; le produit solide obtenu a été lavé à l'eau déminéralisée et séché pendant plusieurs heures à 110°C.

L'analyse du Si, Al et Na dans le produit a été effectuée par spectroscopie d'émission atomique. On a trouvé la composition molaire suivante :

$$100\ SiO_2 : 4,82\ Al_2O_3 : 0.337\ Na_2O.$$

Le produit solide séché a été analysé par diffraction X de poudres et identifié comme étant de la zéolithe NU-88. Le diagramme obtenu est en conformité avec les résultats présentés au tableau 1. Le diffractogramme est donné

dans la figure 1 (en ordonnée l'intensité I (unité arbitraire) et en abscisse 2θ (CuK alpha)].

Le produit obtenu précédemment est calcinée sous azote pendant 24 heures à 550°C; cette étape a été immédiatement suivie d'une seconde calcination sous air à 450°C, pendant 24 heures.

La substance obtenue a ensuite été mise en contact pendant 2 heures à température ambiante avec une solution aqueuse à 1 mole de chlorure d'ammonium en utilisant 50 ml de solution par gramme de produit calciné solide. La substance a ensuite été filtrée, lavée à l'eau permutée et séchée à 110°C. Ce traitement a été répété 3 fois. La substance a ensuite été calcinée sous air pendant 24 heures, à 550°C. Le produit calciné a été analysé en diffraction des rayons X. Le diffractogramme obtenu est donné figure 2 [en abscisse 2θ (CuK alpha) et en ordonnée l'intensité I (unité arbitraire)]. Le diagramme de diffraction X est en accord avec le tableau 2.

L'analyse du Si, Al et Na dans le produit, effectuée par spectroscopie d'émission atomique, a donné la composition molaire suivante :

$$100\ SiO_2 : 4{,}55\ Al_2O_3 : 0{,}009\ Na_2O$$

Un support catalyseur d'hydrocraquage contenant la zéolithe NU-88 fabriqué ci-dessus a été obtenu de la facon suivante. On mélange 19,4 g de la zéolithe NU-88 à 80,6 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

<u>Exemple 2: Préparation de catalyseurs d'hydrocraquage contenant une zéolithe NU-88 conformes à l'invention</u>

Les extrudés de support contenant une zéolithe NU-88 de l'exemple 1 sont imprégnés à sec par une solution aqueuse d'heptamolybdate d'ammonium, séchés une nuit à 120°C sous air et enfin calcinés sous air à 550°C. Les teneurs pondérales en oxydes du catalyseur NU88Mo obtenus sont indiquées dans le tableau 3.

Le catalyseur NU88Mo a ensuite été imprégné par une solution aqueuse renfermant du biborate d'ammonium pour obtenir un dépôt de 1,6% masse de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé NU88MoB. De la même manière, on a ensuite préparé un catalyseur NU88MoSi par imprégnation du catalyseur NU88Mo par une émulsion de silicone Rhodorsil EP1 (Rhone-Poulenc) de manière à déposer 2,0% de SiO2. Les extrudés imprégnés sont ensuite séchés pendant une nuit à 120°C puis calcinés à 550°C pendant 2 heures sous air sec. Enfin, un catalyseur NU88MoBSi a été obtenu imprégnation du catalyseur NU88Mo par une solution aqueuse renfermant le biborate d'ammonium et l'émulsion de silicone Rhodorsil EP1 (Rhone-Poulenc). Les extrudés imprégnés sont alors séchés pendant une nuit à 120°C puis calcinés à 550°C pendant 2 heures sous air sec.

Les extrudés de support contenant une zéolithe NU-88 préparé dans l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur NU88NiMo obtenus sont indiquées dans le tableau 3.

Les extrudés sont imprégnés à sec par une solution aqueuse d'un mélange d'heptamolybdate d'ammonium, de nitrate de nickel et d'acide orthophosphorique. séchés une nuit à 120°C sous air et enfin calcinés sous air à 550°C. Les teneurs pondérales en oxydes du catalyseur NU88NiMoP obtenus sont indiquées dans le tableau 3.

Nous avons ensuite imprégné l'échantillon de catalyseur NU88NiMoP par une solution aqueuse renfermant du biborate d'ammonium. Après maturation à température ambiante dans une atmosphère saturée en eau les extrudés imprégnés sont séchés pendant une nuit à 120°C puis calcinés à 550°C pendant 2 heures sous air sec. On obtient un catalyseur nommé NU88NiMoPB.

Un catalyseur NU88NiMoPSi a été obtenu par la même procédure que le catalyseur NU88NiMoPB ci-dessus mais en remplaçant dans la solution d'imprégnation le précurseur de bore par l'émulsion de silicone Rhodorsil EP1.

Enfin. un catalyseur NU88NiMoPBSi a été obtenu par la même procédure que les catalyseurs ci-dessus mais en utilisant une solution aqueuse renfermant le biborate d'ammonium et l'émulsion de silicone Rhodorsil EP1. On ajoute ensuite à ce catalyseur du fluor par imprégnation d'une solution d'acide fluorhydrique diluée de manière à déposer environ 1% en poids de fluor. Après séchage pendant une nuit à 120°C et calcination à 550°C pendant 2 heures sous air sec on obtient le catalyseur NU88NiMoPBSiF. Les teneurs finales en oxydes des catalyseurs NU88NiMo sont indiquées dans le tableau 3.

Tableau 3 : Caractéristiques des catalyseurs NU88Mo et NU88NiMo

| Catalyseur | NU88Mo | NU88MoB | NU88MoSi | NU88MoBSi |
|---|---|---|---|---|
| $MoO_3$ (% pds) | 14,6 | 14,4 | 14,3 | 14,1 |
| $B_2O_3$ (% pds) | 0 | 1,4 | 0 | 1,33 |
| $SiO_2$ (% pds) | 15,2 | 15,0 | 16,9 | 16,6 |
| Complément à 100% composé majoritairement de $Al_2O_3$ (% pds) | 70,2 | 69,3 | 68,8 | 68,0 |

| Catalyseur | NU88 NiMo | NU88 NiMoP | NU88 NiMoPB | NU88 NiMoPSi | NU88 NiMoPBSi | NU88 NiMoPBSiF |
|---|---|---|---|---|---|---|
| $MoO_3$ (% pds) | 13,8 | 13,3 | 13,0 | 13,0 | 12,8 | 12,7 |
| NiO (% pds) | 3,1 | 3,0 | 2,95 | 2,95 | 2,9 | 2,9 |
| $P_2O_5$ (% pds) | 0 | 4,65 | 4,6 | 4,6 | 4,5 | 4,4 |
| $B_2O_3$ (% pds) | 0 | 0 | 1,6 | 0 | 1,5 | 1,5 |
| $SiO_2$ (% pds) | 14,8 | 14,1 | 13,8 | 15,6 | 15,3 | 15,2 |
| F (% pds) | 0 | 0 | 0 | 0 | 0 | 1,05 |
| Complément à 100% composé majoritairement de $Al_2O_3$ (% pds) | 68,3 | 64,95 | 64,05 | 63,85 | 63,0 | 62,2 |

Le catalyseur NU88NiMoP a ensuite été imprégné par une solution aqueuse renfermant du nitrate de manganèse. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé NU88NiMoPMn. On imprégne ensuite ce catalyseur par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec et on obtient le catalyseur NU88NiMoPMnBSi. On ajoute ensuite à ce catalyseur du fluor par imprégnation d'une solution d'acide fluorhydrique diluée de manière à déposer environ 1% en poids de fluor. Après séchage pendant une nuit à 120°C et calcination à 550°C pendant 2 heures sous air sec on obtient le catalyseur NU88NiMoPMnBSiF. Les teneurs pondérales de ces catalyseurs sont indiquées dans le tableau 3bis.

Tableau 3bis :

| Caractéristiques des catalyseurs NU88NiMo contenant du manganèse | | | |
|---|---|---|---|
| Catalyseur | NU88 NiMoPMn | NU88 NiMoPMnBSi | NU88 NiMoPMnBSiF |
| $MoO_3$ (% pds) | 12,9 | 12,5 | 12,4 |
| NiO (% pds) | 2,9 | 2,8 | 2,8 |
| $MnO_2$ (% pds) | 2,1 | 2,0 | 2,0 |
| $P_2O_5$ (% pds) | 4,8 | 4,6 | 4,5 |
| $B_2O_3$ (% pds) | 0 | 1,4 | 1,4 |
| $SiO_2$ (% pds) | 13,7 | 15,3 | 15,1 |
| F (%pds) | 0 | 0 | 1,0 |
| Complément à 100% composé majoritairement de $Al_2O_3$ (% pds) | 63,6 | 61,4 | 60,8 |

L'analyse, par microsonde électronique, des catalyseurs NU88NiMoPSi, NU88NiMoPBSi, NU88NiMoPBSiF (tableau 3) et des catalyseurs NU88NiMoPMnBSi, NU88NiMoPMnBSiF (tableau 3 bis) montre que le silicium ajouté au catalyseur selon l'invention est principalement localisé sur la matrice et se trouve sous forme de silice amorphe.

Exemple 3 : Préparation d'un support contenant une zéolithe NU-88 et une silice-alumine

Nous avons fabriqué une poudre de silice-alumine par coprécipitation ayant une composition de 2% $SiO_2$ et 98% $Al_2O_3$. Un support de catalyseur d'hydrocraquage contenant cette silice-alumine et la zéolithe NU-88 de l'exemple 1 a été ensuite fabriqué. Pour cela on utilise 20,4% poids de la zéolithe NU-88 de l'exemple 1 que l'on mélange à 79,6 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air.

Exemple 4 : Préparation de catalyseurs d'hydrocraquage contenant une zéolithe NU-88 et une silice-alumine

Les extrudés de support contenant une silice-alumine et une zéolithe NU-88 de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NU88-SiAl-NiMoP obtenus sont indiquées dans le tableau 4.

Nous avons imprégné l'échantillon de catalyseur NU88-SiAl-NiMoP par une solution aqueuse renfermant du biborate d'ammonium de manière a imprégner 1,5% masse de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé NU88-SiAl-NiMoPB qui contient donc du silicium dans la matrice silice-alumine.

Les caractéristiques des catalyseurs NU88-SiAl-NiMo sont résumées dans le tableau 4.

Tableau 4 :

| Caractéristiques des catalyseurs NU88-SiAl-NiMo | | |
|---|---|---|
| Catalyseur | NU88-SiAl-NiMoP | NU88-SiAl-NiMo PB |
| $MoO_3$ (% pds) | 13,2 | 13,0 |
| NiO (% pds) | 2,9 | 2,8 |
| $P_2O_5$ (% pds) | 4,8 | 4,7 |

Tableau 4 : (suite)

| Caractéristiques des catalyseurs NU88-SiAl-NiMo | | |
|---|---|---|
| Catalyseur | NU88-SiAl-NiMoP | NU88-SiAl-NiMo PB |
| $B_2O_3$ (% pds) | 0 | 1,4 |
| $SiO_2$ (% pds) | 16,0 | 15,8 |
| complément à 100% composé majoritairement de $Al_2O_3$ (% pds) | 63,1 | 62,9 |

Exemple 5 : Préparation d'un support contenant une zéolithe Y

Un support de catalyseur d'hydrocraquage contenant une zéolithe Y a été fabriqué en grande quantité de façon à pouvoir préparer différents catalyseurs à base du même support. Pour cela on utilise 20,5 % poids d'une zéolithe Y désaluminée de paramètre cristallin égal à 2,429 nm et de rapport $SiO_2/Al_2O_3$ global de 30,4 et de rapport $SiO_2/Al_2O_3$ de charpente de 58 que l'on mélange à 79,5% poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 223 $m^2/g$ et une distribution en taille de pore monomodale centrée sur 10 nm. L'analyse de la matrice par la diffraction des rayons X révèle que celle ci est composée d'alumine gamma cubique de faible cristallinité et de zéolithe Y désaluminée.

Exemple 6 : Préparation de catalyseurs d'hydrocraquage contenant une zéolithe Y (non conforme à l'invention)

Les extrudés de support contenant une zéolithe Y désaluminée de l'exemple 5 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur YNiMoP obtenus sont indiquées dans le tableau 5. Le catalyseur YNiMoP final contient en particulier 16,3% poids de zéolithe Y de paramètre de maille 2,429 nm de rapport $SiO_2/Al_2O_3$ global de 30,4 et de rapport $SiO_2/Al_2O_3$ de charpente de 58.

Nous avons imprégné l'échantillon de catalyseur YNiMoP par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur NiMoP/alumine-Y dopée au bore.

Un catalyseur YNiMoPSi a été obtenu par la même procédure que le catalyseur YNiMoPB ci-dessus mais en remplaçant dans la solution d'imprégnation le précurseur de bore par l'émulsion de silicone Rhodorsil EP1 (Rhone-Poulenc).

Enfin, un catalyseur YNiMoPBSi a été obtenu imprégnation du catalyseur par une solution aqueuse renfermant le biborate d'ammonium et l'émulsion de silicone Rhodorsil EP1 (Rhône-Poulenc). Les autres étapes de la procédure sont les mêmes que celles indiquées ci dessus. Les caractéristiques des catalyseurs YNiMo sont résumées dans le tableau 5.

Tableau 5 :

| Caractéristiques des catalyseurs YNiMo | | | | | |
|---|---|---|---|---|---|
| Catalyseur | YNiMo | YNiMoP | YNiMoPB | YNiMoPSi | YNiMoPBSi |
| $MoO_3$ (% pds) | 13,5 | 12,9 | 12,7 | 12,7 | 12,5 |
| NiO (% pds) | 3,1 | 3,0 | 2,9 | 2,9 | 2,8 |
| $P_2O_5$ (% pds) | 0 | 4,4 | 4,3 | 4,3 | 4,2 |
| $B_2O_3$ (%pds) | 0 | 0 | 1,8 | 0 | 1,8 |
| $SiO_2$ (% pds) | 16,2 | 15,4 | 15,2 | 17,0 | 16,7 |

Tableau 5 : (suite)

| Caractéristiques des catalyseurs YNiMo | | | | | |
|---|---|---|---|---|---|
| Catalyseur | YNiMo | YNiMoP | YNiMoPB | YNiMoPSi | YNiMoPBSi |
| Complément à 100% composé majoritairement de $Al_2O_3$ (% pds) | 67,2 | 64,3 | 63,1 | 63,1 | 62,0 |

L'analyse, par microsonde électronique, des catalyseurs YNiMoPSi, YNiMoPBSi (tableau 5) montre que le silicium ajouté au catalyseur selon l'invention est principalement localisé sur la matrice et se trouve sous forme de silice amorphe.

<u>Exemple 7 : Comparaison des catalyseurs en hydrocraquage d'un qazole sous vide à conversion oartielle.</u>

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée | |
| point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 $cm^3$ |
| Catalyseur d'hydrocraquage | 40 $cm^3$ |
| Température | 400°C |
| Débit d'hydrogène | 20 l/h |
| Débit de charge | 40 $cm^{3/}h$ |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (C8), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{ moins}} \text{ de l'effluent}$$

380°C $^{\text{moins}}$ représente la fraction distillée à une température inférieure ou égale à 380°C.

La sélectivité brute SB en distillats moyens est prise égale à :

$$SB = 100*\text{poids de la fraction } (150°C\text{-}380°C)/\text{poids de la fraction } 380°C^{\text{ moins}} \text{ de l'effluent}$$

La conversion en hydrodésulfuration HDS est prise égale à :

$$HDS = (S_{initial} - S_{effluent}) / S_{initial} * 100 = (24600 - S_{effluent)} / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau suivant, nous avons reporté la conversion brute CB à 400°C, la sélectivité brute SB, la conversion en hydrodésulfuration HDS et la conversion en hydrodéazotation HDN pour les catalyseurs.

Tableau 6

| Activités catalytiques des catalyseurs en hydrocraquage partiel à 400°C | | | | | |
|---|---|---|---|---|---|
| | | CB (%pds) | SB (%) | HDS (%) | HDN (%) |
| YNiMoP | NiMoP/Y | 48,7 | 80,3 | 99,43 | 96,6 |
| YNiMoPB | NiMoPB/Y | 49,3 | 80,4 | 99,57 | 97,4 |
| YNiMoPSi | NiMoPSi/Y | 49,5 | 78,9 | 99,85 | 98,3 |
| NU88-SiAl-NiMoP | NiMoP/NU88-SiAl | 49,9 | 59,1 | 98,5 | 96,5 |
| NU88-SiAl-NiMoPB | NiMoPB/NU88-SiAl | 50,3 | 58,6 | 98,4 | 97,3 |
| NU88NiMo | NiMo/NU-88 | 49,7 | 59,2 | 98,7 | 95,1 |
| NU88NiMoP | NiMoP/NU-88 | 49,7 | 60,3 | 99,3 | 96,2 |
| NU88NiMoPB | NiMoPB/NU-88 | 50,1 | 60,4 | 99,4 | 97,3 |
| NU88NiMoPSi | NiMoPSi/NU-88 | 50,4 | 59,3 | 99,4 | 98,0 |
| NU88NiMoPBSi | NiMoPBSi/NU-88 | 50,9 | 59,4 | 99,5 | 98,4 |

Les résultats du tableau 6 montrent que l'utilisation d'un catalyseur selon l'invention contenant une zéolithe NU-88 est plus actif que les catalyseurs de l'art antérieur et que d'autre part l'ajout d'au moins un élément choisi dans le groupe formé par le B, Si et P apporte une amélioration des performances du catalyseur en conversion. La sélectivité brute en distillats moyen diminue du fait de l'augmentation du niveau de conversion comme il est bien connu. Les catalyseurs de l'invention contenant du bore et du silicium sont donc particulièrement intéressants pour l'hydrocraquage partiel de charge de type distillats sous vide contenant de l'azote à une pression d'hydrogène modérée.

De plus, les résultats du tableau 6 montrent qu'il est avantageux d'introduire le silicium sur le catalyseur déjà préparé (série NU88NiMo) plutôt que sous la forme d'un support contenant du silicium obtenu à partir d'une silice-alumine (série NU88-SiAl-NiMo). Il est donc particulièrement avantageux d'introduire le silicium sur un précurseur contenant déjà les éléments du groupe VIB et/ou VIII et éventuellement au moins l'un des éléments P, B et F.

<u>Exemple 8 : Comparaison des catalvseurs en hydrocraquage d'un gazole sous vide à haute conversion</u>

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée | |
| point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

On ajoute à la charge 0,6% poids d'aniline et 2% poids de diméthyl-disulfure afin de simuler les pressions partielles d'$H_2S$ et d'$NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

| | |
|---|---|
| Pression totale | 9 MPa |
| Catalyseur | 80 $cm^3$ |
| Température | 360-420°C |
| Débit d'hydrogène | 80 l/h |
| Débit de charge | 80 $cm^3$/h |

Les performances catalytiques sont exprimées par la température qui permet d'atteindre un niveau de conversion brute de 70% et par la sélectivité brute en distillats moyen 150-380°C. Ces performances catalytiques sont mesurées sur le catalyseur après qu'une période de stabilisation, généralement au moins 48 heures, ait été respectée. La conversion brute CB est prise égale à :

CB = % pds de 380°C $^{moins}$ de l'effluent

La sélectivité brute SB en distillat moyen est prise égale à :

SB = 100*poids de la fraction (150°C-380°C)/poids de la fraction 380°C $^{moins}$ de l'effluent

Le rendement en essence (27-150) (ci dessous Rdt Ess) est égal au % poids de composés ayant un point d'ébullition compris entre 27 et 150 °C dans les effluents. Le rendement en carburéacteur (kérosène, 150-250) (ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le tableau 7 suivant, nous avons reporté la température de réaction et la sélectivité brute pour les catalyseurs décrits dans les tableaux 3 et 3 bis.

Tableau 7

| Activités catalytiques des catalyseurs en hydrocraquage haute conversion (70%) | | | | |
|---|---|---|---|---|
| | | T (°C) | Rdt Essence (% pds) | Rdt kérosène (% pds) |
| YNiMo | NiMo/Y | 375 | 20,5 | 24,1 |
| YNiMo P | NiMoP/Y | 374 | 21,2 | 24,7 |
| YNiMo PB | NiMoPB/Y | 374 | 20,7 | 23,6 |
| YNiMo PSi | NiMoPSi/Y | 374 | 19,9 | 23,1 |
| NU88Mo | Mo/NU-88 | 373 | 36,5 | 12,4 |
| NU88MoB | MoB/ NU-88 | 373 | 36,4 | 12,1 |
| NU88MoSi | MoSi/ NU-88 | 372 | 36,1 | 12,0 |
| NU88MoBSi | MoBSi/ NU-88 | 371 | 35,3 | 12,1 |
| NU88NiMo | NiMo/NU-88 | 373 | 37,4 | 12,0 |
| NU88NiMoP | NiMoP/NU-88 | 373 | 37,4 | 12,9 |
| NU88NiMoPB | NiMoPB/NU-88 | 371 | 37,3 | 12,6 |
| NU88NiMoPSi | NiMoPSi/NU-88 | 371 | 37,9 | 12,9 |
| NU88NiMoPBSi | NiMoPBSi/NU-88 | 370 | 36,6 | 12,9 |
| NU88NiMoPBSiF | NiMoPBSiF/NU-88 | 367 | 36,4 | 13,2 |
| NU88NiMoPMn | NiMoPMn/NU-88 | 371 | 36,4 | 12,6 |
| NU88NiMoPMnBSi | NiMoPMnBSi/NU-88 | 368 | 35,9 | 12,7 |
| NU88NiMoPMnBSiF | NiMoPMnBSiF/NU-88 | 365 | 35,7 | 12,4 |

Le tableau 7 met en évidence que l'utilisation d'un catalyseur selon l'invention contenant de la zéolithe NU-88 conduit à des niveaux de conversion plus élevées (c'est à dire des températures de conversion plus basses pour une conversion donnée de 70% poids) par rapport aux catalyseurs non conformes. D'autre part, l'ajout d'au moins un élément choisi dans le groupe formé par P, B et Si aux catalyseurs selon l'invention conduit aussi à une augmentation de l'activité. On constate également l'amélioration apportée par la présence du manganèse ou du fluor sur l'activité. Par ailleurs, l'ensemble des catalyseurs selon l'invention conduit à des rendements en essence et en kérosène améliorés par rapport à ceux enregistrés dans le cas des catalyseurs de l'art antérieur.

D'une manière générale, l'ajout d'au moins un élément choisi dans le groupe P, B, Si, VIIB, VIIA au catalyseur contenant la zéolithe NU-88 et l'élément du groupe VIB permet d'améliorer l'activité en conversion, ce qui se traduit par une diminution de la température de réaction nécessaire pour atteindre 70% de conversion mais tend à faire diminuer la sélectivité brute en essence et kérosène et en particulier la sélectivité en essence, celle-ci restant toujours nettement supérieure à celle obtenue avec les catalyseurs à base de zéolithe Y de l'art antérieur.

## Revendications

**1.** Catalyseur comprenant au moins une matrice et au moins un métal choisi dans le groupe formé par les métaux du groupe VIII et du groupe VIB **caractérisé en ce qu'**il comprend au moins un élément promoteur choisi dans le groupe formé par le bore, le silicium et le phosphore et, au moins une zéolithe NU-88 telle que définie:

- i) une composition chimique exprimée sur une base anhydre, en termes de rapports molaires d'oxydes, par la formule :

$$100\ XO_2,\ m\ Y_2O_3,\ p\ R_{2/n}O,$$

où

m est égal ou inférieur à 10,
p est égal ou inférieur à 20,
R représente un ou plusieurs cations de valence n,
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et

- ii) le fait qu'elle présente, sous forme brute de synthèse, un diagramme de diffraction X comportant les résultats présentés dans le tableau 1 suivant :

Tableau 1 :

| Tableau de diffraction des rayons X de la zéolithe NU-88 (brute de synthèse) | |
|---|---|
| $d_{hkl}$ ($10^{-10}$m) | $I/I_{max}$ |
| 12,1±0,35<br>11,0±0,30 | F ou TF (1)<br>F (1) |
| 9,88±0,25<br>6.17±0.15 | m (1)<br>f |
| 3,97±0,09<br>3,90±0.08. | TF (2)<br>TF (2) |
| 3,80±0,08<br>3,66±0,07 | f (2)<br>tf |
| 3,52±0,07<br>3,27±0,07 | tf<br>tf |
| 3,09±0,06<br>2,91±0,06 | f<br>f |
| 2,68±0,06<br>2,49±0,05 | tf<br>tf |
| 2,20±0,05<br>2,059±0,05 | tf<br>f |
| 1.729±0.04 | tf |

(1) Ces pics ne sont pas résolus et font partie d'un même massif.
(2) Ces pics ne sont pas résolus et font partie du même massif.

**2.** Catalyseur selon la revendication 1 dans lequel la valeur m de la zéolithe est comprise entre 0,1 et 10.

**3.** Catalyseur comprenant au moins une matrice et au moins un métal choisi dans le groupe formé par les métaux du groupe VIII et du groupe VIB **caractérisé en ce qu'**il comprend au moins un élément promoteur choisi dans le groupe formé par le bore, le silicium et le phosphore, et au moins une zéolithe NU-88 telle que définie :

i) une composition chimique exprimée sur une base anhydre, en termes de rapports molaires d'oxydes, par la formule

$$100\ XO_2 : \text{inférieur ou égal à } 10\ Y_2O_3 : \text{inférieur ou égal à } 10\ M_2O,$$

où
X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et

M est au moins un cation de métal alcalin (groupe IA de la Classification Périodique des Eléments) et/ou l'ammonium et/ou l'hydrogène,
ii) le fait qu'elle présente, sous hydrogène, un diagramme de diffraction X comportant les résultats présentés dans le tableau 2 suivant :

Tableau 2 :

| Tableau de diffraction des rayons X de la zéolithe NU-88 (forme hydrogène) | |
|---|---|
| dhkl ($10^{-10}$m) | $I/I_{max}$ |
| 12,1±0,35<br>11,0±0,30 | TF(1)<br>F ou TF(1) |
| 9,92±0,25<br>8,83±0,20 | f ou m(1)<br>tf |
| 6,17±0,15<br>3,99±0,10 | f<br>F ou TF(2) |
| 3,91±0,08<br>3,79±0,08 | TF(2)<br>f ou m(2) |
| 3,67±0,07<br>3,52±0,07 | tf<br>tf |
| 3,09±0,06<br>2,90±0,06 | f<br>f |
| 2,48±0,05<br>2,065±0,05 | f<br>f |
| 1,885±0,04<br>1,733±0,04 | tf<br>tf |

(1) Ces pics ne sont pas résolus et font partie d'un même massif.
(2) Ces pics ne sont pas résolus et font partie du même massif.

**4.** Catalyseur selon l'une des revendications 1 ou 2 dans lequel la zéolithe a la composition chimique exprimée sur une base anhydre, en termes de rapports molaires d'oxydes suivante :

$$100\ XO_2 : \text{inférieur ou égal à } 10\ Y_2O_3 : \text{inférieur ou égal à } 10\ Q : \text{inférieur ou égal à } 10\ M_2O,$$

X est le silicium et/ou le germanium,
Y est choisi dans le groupe formé par les éléments suivants : l'aluminium, le fer, le gallium, le bore, le titane, le vanadium, le zirconium, le molybdène, l'arsenic, l'antimoine, le chrome et le manganèse, et
où M est au moins un cation de métal alcalin (groupe IA de la Classification Périodique des Eléments) et/ou l'ammonium, et Q est au moins un cation organique azoté ou un précurseur de cation organique azoté ou un produit de décomposition de cation organique azoté.

**5.** Catalyseur selon l'une des revendications 1 à 4 dans lequel la zéolithe est telle que X est le silicium et Y est l'aluminium.

**6.** Catalyseur selon l'une des revendication 1, 2, 4 ou 5 dans lequel la zéolithe est au moins en partie sous forme H+ ou NH4+ ou métallique, ledit métal étant choisi dans le groupe formé par les groupes IA, IB, IIA, IIB, IIIA, IIIB (y compris les terres rares), VIII, Sn, Pb et Si.

**7.** Catalyseur selon l'une des revendications 1 à 6 renfermant en outre au moins un éléments du groupe VIIA de la classification périodique.

8. Catalyseur selon l'une des revendications 1 à 7 renfermant en outre au moins un élément du groupe VIIA de la classification périodique.

9. Catalyseur selon l'une des revendications 1 à 8 renfermant en poids par rapport au catalyseur.

- 0,1 à 60% d'au moins un métal choisi dans le groupe formé par les éléments du groupe VIII et du groupe VIB
- 0,1 à 99% d'au moins une matrice minérale poreuse amorphe ou mal cristallisée de type oxyde oxyde
- 0,1 à 99,8% de zéolithe NU-88
- 0,1 à 15% d'au moins un élément promoteur choisi dans le groupe formé par le silicium, le bore et le phosphore.
- 0 à 20% d'au moins un élément choisi dans le groupe VIIA
- 0 à 20% d'au moins un élément choisi dans le groupe VIIB

10. Procédé de préparation d'un catalyseur selon l'une des revendications 1 à 9 dans lequel on introduit dans un mélange d'au moins une matrice avec la zéolithe NU-88, avant ou après la mise en forme dudit mélange, au moins un métal choisi parmi les métaux du groupe VIII et du groupe VIB, **caractérisé en ce que** l'on imprègne le catalyseur ainsi obtenu par au moins une solution contenant au moins un élément choisi parmi le bore, le silicium et le phosphore.

11. Procédé de préparation d'un catalyseur selon la revendication 10 dans lequel on imprègne le catalyseur par au moins une solution d'au moins un élément du groupe VIIA.

12. Procédé de préparation d'un catalyseur selon la revendication 10 ou 11 dans lequel on imprègne le catalyseur par au moins une solution d'au moins un élément du groupe VIIB.

13. Procédé de préparation d'un catalyseur selon l'une des revendications 10 à 12 dans lequel on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C.

14. Procédé de préparation d'un catalyseur selon l'une des revendications 10 à 13 dans lequel on procède à un séchage et à une calcination entre chaque imprégnation d'un élément contenu dans le catalyseur.

15. Utilisation d'un catalyseur selon l'une des revendications 1 à 9 ou préparé selon l'une des revendications 10 à 14 dans un procédé d'hydrocraquage de charges hydrocarbonées.

16. Utilisation selon la revendication 15 dans laquelle on effectue un traitement de sulfuration du catalyseur.

17. Utilisation selon l'une des revendications 15 à 16 telle que la charge est constituée d'au moins 80% en volume de composés dont les points d'ébullitoin sont d'au moins 350°C.

18. Utilisation selon l'une des revendications 15 à 17 telle que la température est supérieure à 200°C, sous une pression supérieure à 0,1 MPa, avec un taux de recyclage d'hydrogène supérieur à 50 normaux litres d'hydrogène par litre de charge et avec une v.v.h. comprise entre 0,1 et 20 $h^{-1}$.

19. Utilisation selon l'une des revendications 15 à 18 dans un procédé d'hydrocraquage partiel, avec un niveau de conversion inférieur à 55%.

20. Utilisation selon la revendication 19 telle que la température est supérieure ou égale à 230°C, sous une pression supérieure à 2 MPa et d'au plus 12 MPa, avec une quantité d'hydrogène supérieure à 100 Nl/Nl de charge et avec une vitesse volumique horaire comprise entre 0,15 et 10 $h^{-1}$

21. Utilisation selon l'une des revendications 15 à 18 telle que la pression est supérieure à 5 MPa avec un niveau de conversion supérieur à 55%

22. Utilisation selon la revendication 21 telle que la température est supérieure ou égale à 230°C, sous une pression supérieure à 5 MPa, avec une quantité d'hydrogène supérieure à 100 Nl/Nl de charge et avec une vitesse volumique comprise entre 0,15 et 10 $h^{-1}$.

**23.** Utilisation selon l'une des revendications 15 à 22 telle qu'une étape préalable d'hydrotraitement est effectuée à une température comprise entre 350 et 460°C, sous une pression totale d'au moins 2 MPa, avec une quantité d'hydrogène d'au moins 100Nl/Nl de charge, avec une vitesse volumique horaire comprise entre 0,1 et 5 $h^{-1}$ et en présence d'un catalyseur d'hydrotraitement.

## Claims

**1.** A catalyst comprising at least one matrix and at least one metal selected from the group formed by group VIII and group VIB elements, **characterized in that** it contains at least one promoter element selected from the group formed by boron, silicon and phosphorous and at least one NU-88 zeolite defined as follows:

i) a chemical composition with the following formula, expressed in terms of the mole ratios of the oxides for the anhydrous state:

$$100XO_2,\ m\ Y_2O_3,\ pR_{2/n}O$$

where
m is 10 or less;
p is 20 or less;
R represents one or more cations with valency n;
X represents silicon and/or germanium;
Y is selected from the group formed by the following elements: aluminium, iron, gallium, boron, titanium, vanadium, zirconium, molybdenum, arsenic, antimony, chromium and manganese; and
ii) an X ray diffraction diagram, in its as synthesized state, which comprises the results shown in Table 1:

TABLE 1:

| **X ray diffraction diagram for NU-88 zeolite (as synthesized state)** | |
|---|---|
| $d_{hkl}$ ($10^{-10}$ m) | $I/I_{max}$ |
| 12.1±0.35 | s or vs (1) |
| 11.0±0.30 | s (1) |
| 9.88±0.25 | m (1) |
| 6.17±0.15 | w |
| 3.97±0.09 | vs (2) |
| 3.90±0.08 | vs (2) |
| 3.80±0.08 | w (2) |
| 3.66±0.07 | vw |
| 3.52±0.07 | vw |
| 3.27±0.07 | vw |
| 3.09±0.06 | w |
| 2.91±0.06 | w |
| 2.68±0.06 | vw |
| 2.49±0.05 | vw |
| 2.20±0.05 | vw |
| 2.059±0.05 | w |
| 1.729±0.04 | vw |

(1) these peaks were not resolved and formed part of a feature;
(2) these peaks were not resolved and formed part of the same feature.

**2.** A catalyst according to claim 1, in which the value m for the zeolite is in the range 0.1 to 10

**3.** A catalyst comprising at least one matrix and one metal selected from the group formed by group VIII metals and group VIB metals, **characterized in that** it comprises at least one promoter element selected from the group formed by boron, silicon and phosphorous and at least one NU-88 zeolite defined as follows:

i) a chemical composition with the following formula, expressed in terms of the mole ratios of the oxides for the anhydrous state:

$$100XO_2, \text{ 10 or less } Y_2O_3, \text{ 10 or less } M_2O;$$

where
X represents silicon and/or germanium;
Y is selected from the group formed by the following elements: aluminium, iron, gallium, boron, titanium, vanadium, zirconium, molybdenum, arsenic, antimony, chromium and manganese; and
M is at least one cation of an alkali metal (group IA of the periodic table) and/or ammonium and/or hydrogen;
ii) an X ray diffraction diagram, in its as synthesized state, which comprises the results shown in Table 2:

TABLE 2:

| **X ray diffraction diagram for NU-88 zeolite (hydrogen form** | |
|---|---|
| $d_{hkl}$ ($10^{-10}$ m) | $I/I_{max}$ |
| 12.1±0.35<br>11.0±0.30 | vs (1)<br>s or vs (1) |
| 9.92±0.25<br>8.83±0.20 | w or m (1)<br>vw |
| 6.17±0.15<br>3.99±0.10 | w<br>s or vs (2) |
| 3.91±0.08<br>3.79±0.08 | vs (2)<br>w or m (2) |
| 3.67±0.07<br>3.52±0.07 | vw<br>vw |
| 3.09±0.06<br>2.90±0.06 | w<br>w |
| 2.48±0.05<br>2.065±0.05 | w<br>w |
| 1.885±0.04<br>1.733±0.04 | vw<br>vw |

(1) these peaks were not resolved and formed part of a feature;
(2) these peaks were not resolved and formed part of the same feature.

**4.** A catalyst according to claim 1 or claim 2, in which the zeolite has the following chemical composition, expressed in terms of the mole ratios of the oxides for the anhydrous state:

$$100XO_2, \text{ 10 or less } Y_2O_3, \text{ 10 or less Q, 10 or less } M_2O;$$

where
X represents silicon and/or germanium;
Y is selected from the group formed by the following elements: aluminium, iron, gallium, boron, titanium, vanadium, zirconium, molybdenum, arsenic, antimony, chromium and manganese;

M is at least one cation of an alkali metal (group IA of the periodic table) and/or ammonium; and Q is at least one nitrogen-containing organic cation or a precursor of a nitrogen-containing organic cation or a decomposition product of a nitrogen-containing organic cation.

**5.** A catalyst according to any one of claims 1 to 4, in which the zeolite is such that X is silicon and Y is aluminium.

**6.** A catalyst according to any one of claims 1, 2, 4 or 5, in which the zeolite is at least partially in the H+ or NH4+ form or metal form, said metal being selected from the group formed by groups IA, IB, IIA, IIB, IIIA, IIIB (including the rare earths), VIII, Sn, Pb and Si.

**7.** A catalyst according to any one of claims 1 to 6, further containing at least one element from group VIIA of the periodic table.

**8.** A catalyst according to any one of claims 1 to 7, further containing at least one element from group VIIB of the periodic table.

**9.** A catalyst according to any one of claims 1 to 8, containing, with respect to the weight of the catalyst:

- 0.1% to 60% of at least one metal selected from the group formed by group VIII and group VIB metals;
- 0.1% to 99% of at least one amorphous or low crystallinity oxide type porous mineral matrix;
- 0.1% to 99.8% of NU-88 zeolite;
- 0,1 to 15% of at least one promoter element selected from the group formed by silicon, boron and phosphorous;
- 0 to 20% of at least one element selected from group VIIA;
- 0 to 20% of at least one element selected from group VIIB.

**10.** A process for preparing a catalyst according to any one of claims 1 to 9, in which at least one metal selected from group VIII metals and group VIB metals is introduced into a mixture of at least one matrix and the NU-88 zeolite, before or after forming said mixture, **characterized in that** the catalyst is impregnated with at least one solution containing at least one element selected from the group formed by boron, silicon and phosphorous.

**11.** A process for preparing a catalyst according to claim 10, in which the catalyst is impregnated with at least one solution of at least one group VIIA element.

**12.** A process for preparing a catalyst according to claim 10 to 11, in which the catalyst is impregnated with at least one solution of at least one group VIIB element.

**13.** A process for preparing a catalyst according to any one of claims 1 to 12, in which the moist solid is left in a moist atmosphere at a temperature in the range 10°C to 80°C, then the moist solid obtained is dried at a temperature in the range 60°C to 150°C, and finally the solid obtained is calcined at a temperature in the range 150°C to 800°C.

**14.** A process for preparing a catalyst according to any one of claims 10 to 13, in which drying and calcining are carried out between each step for impregnating an element contained in the catalyst.

**15.** Use of a catalyst according to any one of claims 1 to 9 or prepared according to any one of claims 10 to 14, in a process for hydrocracking hydrocarbon feeds.

**16.** Use according to claim 15, in which a catalyst sulphurisation treatment is carried out.

**17.** Use according to claim 15 or claim 16, in which the feed is constituted by at least 80% by volume of compounds with a boiling point of at least 350°C.

**18.** Use according to any one of claims 15 to 17, in which the temperature is over 200°C, the pressure is over 0.1 MPa, with a hydrogen recycle ratio of over 50 normal litres of hydrogen per litre of feed, and the HSV is in the range 0.1 to 20 $h^{-1}$.

**19.** Use according to any one of claims 15 to 18, in a partial hydrocracking process, with a degree of conversion of less than 55%.

**20.** Use according to claim 19, in which the temperature is 230°C or more, the pressure is over 2 MPa and at most 12 MPa, the quantity of hydrogen is over 100 Nl/Nl of feed and the hourly space velocity is in the range 0.15 to 10 $h^{-1}$.

**21.** Use according to any one of claims 15 to 18, in which the pressure is over 5 MPa and the degree of conversion is over 55%.

**22.** Use according to claim 21, in which the temperature is 230°C or more, the pressure is over 5 MPa, the quantity of hydrogen is over 100 Nl/Nl of feed and the hourly space velocity is in the range 0.15 to 10 $h^{-1}$.

**23.** Use according to any one of claims 15 to 22, in which a prior hydrotreatment step is carried out at a temperature in the range 350°C to 460°C, at a total pressure of at least 2 MPa, with a quantity of hydrogen of at least 100 Nl/Nl of feed, with an hourly space velocity in the range 0.1 to 5 $h^{-1}$ and in the presence of a hydrotreatment catalyst.

## Patentansprüche

**1.** Katalysator, umfassend mindestens eine Matrix und mindestens ein Metall, das aus der Gruppe gewählt wird, die durch die Metalle der Gruppe VIII und der Gruppe VIB gebildet wird, **dadurch gekennzeichnet, daß** er mindestens ein Promotorelement enthält, das aus der Gruppe gewählt wird, die durch Bor, Silicium und Phosphor gebildet wird, und mindestens ein Zeolith NU-88, wie definiert:

i) eine chemische Zusammensetzung, die auf einer wasserlosen Basis durch Oxid-Molverhältnisse durch die folgende Formel ausgedrückt wird:

$$100\ X\ O_2,\ m\ Y_2O_3,\ p\ R_{2/n}O,$$

wobei m kleiner oder gleich 10 ist,
p kleiner oder gleich 20 ist,
R eine oder mehrere Kationen der Wertigkeit n darstellt,
X Silicium und/oder Germanium ist;
Y aus der Gruppe gewählt wird, die durch die folgenden Elemente gebildet wird: Aluminium, Eisen, Gallium, Bor, Titan, Vanadium, Zirconium, Molybdän, Arsen, Antimon, Chrom und Mangan, und

ii) wobei sie in roh synthetisierter Form ein Röntgenbeugungsdiagramm aufweist, das die in der folgenden Tabelle 1 gezeigten Ergebnisse aufweist:

Tabelle 1:

| Röntgenbeugungsdiagramm von Zeolith NU-88 (roh synthetisiert) | |
|---|---|
| $d_{hkl}$ ($10^{-10}$ m) | $I/I_{max}$ |
| 12,1 ± 0,35<br>11,0 ± 0,30 | F oder TF(1)<br>F(1) |
| 9,88 ± 0,25<br>6,17 ± 0,15 | m(1)<br>f |
| 3,97 ± 0,09<br>3,90 ± 0,08 | TF(2)<br>TF(2) |
| 3,80 ± 0,08<br>3,66 ± 0,07 | f(2)<br>tf |
| 3,52 ± 0,07<br>3,27 ± 0,07 | tf<br>tf |

(1) Diese Spitzen werden nicht aufgelöst und sind Bestandteil der gleichen Scheitellinie.
(2) Diese Spitzen werden nicht aufgelöst und sind Bestandteil der gleichen Scheitellinie.

Tabelle 1: (fortgesetzt)

| Röntgenbeugungsdiagramm von Zeolith NU-88 (roh synthetisiert) | |
|---|---|
| $d_{hkl}$ ($10^{-10}$ m) | $I/I_{max}$ |
| 3,09 ± 0,06<br>2,91 ± 0,06 | f<br>f |
| 2,68 ± 0,06<br>2,49 ± 0,05 | tf<br>tf |
| 2,20 ± 0,05<br>2,059 ± 0,05 | tf<br>f |
| 1,729 ± 0,04 | tf |

**2.** Katalysator nach Anspruch 1, wobei der Wert m des Zeoliths zwischen 0,1 und 10 liegt.

**3.** Katalysator, umfassend mindestens eine Matrix und mindestens ein Metall, das aus der Gruppe gewählt wird, die durch die Metalle der Gruppe VIII und der Gruppe VIB gebildet wird, **dadurch gekennzeichnet, daß** er mindestens ein Promotorelement enthält, das aus der Gruppe gewählt wird, die durch Bor, Silicium und Phosphor gebildet wird, und mindestens ein Zeolith NU-88, wie definiert:

i) eine chemische Zusammensetzung, die auf einer wasserlosen Basis durch Oxid-Molverhältnisse durch die folgende Formel ausgedrückt wird:

$$100\ X\ O_2\text{: kleiner oder gleich } 10\ Y_2O_3\text{: kleiner oder gleich } 10\ M_2O,$$

wobei X Silicium und/oder Germanium ist,
Y aus der Gruppe gewählt wird, die durch die folgenden Elemente gebildet wird: Aluminium, Eisen, Gallium, Bor, Titan, Vanadium, Zirconium, Molybdän, Arsen, Antimon, Chrom und Mangan, und
M mindestens ein Alkalimetallkation (Gruppe IA des Periodensystems der Elemente) und/oder Ammonium und/oder Wasserstoff ist.

ii) wobei sie unter Wasserstoff ein Röntgenbeugungsdiagramm aufweist, das die in der folgenden Tabelle 2 gezeigten Ergebnisse aufweist:

Tabelle 2:

| Röntgenbeugungsdiagramm von Zeolith NU-88 (Wasserstoffform) | |
|---|---|
| $d_{hkl}$ ($10^{-10}$ m) | $I/I_{max}$ |
| 12,1 ± 0,35<br>11,0 ± 0,30 | TF(1)<br>F oder TF(1) |
| 9,92 ± 0,25<br>8,83 ± 0,20 | f oder m (1)<br>tf |
| 6,17 ± 0,15<br>3,99 ± 0,10 | f<br>F oder TF(2) |
| 3,91 ± 0,08<br>3,79 ± 0,08 | TF(2)<br>f oder m(2) |
| 3,67 ± 0,07<br>3,52 ± 0,07 | tf<br>tf |

(1) Diese Spitzen werden nicht aufgelöst und sind Bestandteil der gleichen Scheitellinie.
(2) Diese Spitzen werden nicht aufgelöst und sind Bestandteil der gleichen Scheitellinie.

Tabelle 2: (fortgesetzt)

| Röntgenbeugungsdiagramm von Zeolith NU-88 (Wasserstoffform) | |
|---|---|
| $d_{hkl}$ ($10^{-10}$ m) | $I/I_{max}$ |
| 3,09 ± 0,06<br>2,90 ± 0,06 | f<br>f |
| 2,48 ± 0,05<br>2,065 ± 0,05 | f<br>f |
| 1,885 ± 0,04<br>1,733 ± 0,04 | tf<br>tf |

**4.** Katalysator nach einem der Ansprüche 1 oder 2, wobei das Zeolith die chemische Zusammensetzung hat, die auf einer wasserlosen Basis durch die folgenden Oxid-Molverhältnisse ausgedrückt wird:

$$100\ X\ O_2\text{: kleiner oder gleich 10 } Y_2O_3\text{: kleiner oder gleich 10 Q: kleiner oder gleich 10 } M_2O,$$

wobei X Silicium und/oder Germanium ist,
Y aus der Gruppe gewählt wird, die durch die folgenden Elemente gebildet wird: Aluminium, Eisen, Gallium, Bor, Titan, Vanadium, Zirconium, Molybdän, Arsen, Antimon, Chrom und Mangan, und
M mindestens ein Alkalimetallkation (Gruppe IA des Periodensystems der Elemente) und/oder Ammonium ist, und
Q mindestens ein stickstoffhaltiges organisches Kation oder ein Vorprodukt eines stickstoffhaltigen organischen Kations oder ein Zersetzungsprodukt eines stickstoffhaltigen organischen Kations ist.

**5.** Katalysator nach einem der Ansprüche 1 bis 4, wobei das Zeolith in X Silicium und in Y Aluminium ist.

**6.** Katalysator nach einem der Ansprüche 1, 2, 4 oder 5, wobei das Zeolith mindestens zum Teil in Form von H+ oder NH4+ oder in metallischer Form vorliegt, wobei dieses Metall aus der Gruppe gewählt wird, die durch die Gruppen IA, IB, IIA, IIB, IIIA, IIIB (einschließlich der Seltenerden), VIII, Sn, Pb und Si gebildet wird.

**7.** Katalysator nach einem der Ansprüche 1 bis 6, außerdem enthaltend mindestens ein Element der Gruppe VIIA des Periodensystems der Elemente.

**8.** Katalysator nach einem der Ansprüche 1 bis 7, außerdem enthaltend mindestens ein Element der Gruppe VIIB des Periodensystems der Elemente.

**9.** Katalysator nach einem der Ansprüche 1 bis 8, enthaltend in Gewichtsprozent des Katalysators:

- 0,1 bis 60 % mindestens eines Metalls, das aus der Gruppe gewählt wird, die durch die Elemente der Gruppe VIII und der Gruppe VIB gebildet wird
- 0,1 bis 99 % mindestens einer mineralischen, porösen, amorphen oder schlecht kristallisierten Matrix vom Typ Oxid-Oxid
- 0,1 bis 99,8 % Zeolith NU-88
- 0,1 bis 15 % eines Prototorelements, das aus der Gruppe gewählt wird, die durch Silicium, Bor und Phosphor gebildet wird
- 0 bis 20 % mindestens eines Elements, das aus der Gruppe VIIA gewählt wird
- 0 bis 20 % mindestens eines Elements, das aus der Gruppe VIIB gewählt wird

**10.** Verfahren zur Herstellung eines Katalysators nach einem der Ansprüche 1 bis 9, wobei einer Mischung aus mindestens einer Matrix mit dem Zeolith NU-88, vor oder nach dem Verformen dieser Mischung, mindestens ein Metall zugesetzt wird, das aus den Metallen der Gruppe VIII und der Gruppe VIB gewählt wird, **dadurch gekennzeichnet, daß** der so erhaltene Katalysator mit mindestens einer Lösung imprägniert wird, die mindestens ein Element enthält, das aus Bor, Silicium und Phosphor gewählt wird.

**11.** Verfahren zur Herstellung eines Katalysators nach Anspruch 10, wobei der Katalysator mit mindestens einer Lösung mit mindestens einem Element aus der Gruppe VIIA imprägniert wird.

**12.** Verfahren zur Herstellung eines Katalysators nach Anspruch 10 oder 11, wobei der Katalysator mit mindestens einer Lösung mit mindestens einem Element aus der Gruppe VIIB imprägniert wird.

**13.** Verfahren zur Herstellung eines Katalysators nach einem der Ansprüche 10 bis 12, wobei die feuchte Festsubstanz in einer feuchten Atmosphäre bei einer Temperatur zwischen 10 und 80 °C ruhen gelassen wird, die erhaltene feuchte Festsubstanz dann bei einer Temperatur zwischen 60 und 150 °C getrocknet wird und die erhaltene Festsubstanz schließlich bei einer Temperatur zwischen 150 und 800 °C geglüht wird.

**14.** Verfahren zur Herstellung eines Katalysators nach einem der Ansprüche 10 bis 13, wobei zwischen jeder Imprägnierung eines Elements, das im Katalysator enthalten ist, eine Trocknungs- und ein Glühvorgang durchgeführt wird.

**15.** Verwendung eines Katalysators nach einem der Ansprüche 1 bis 9, oder der nach einem der Ansprüche 10 bis 14 hergestellt wurde, in einem Verfahren zum Hydrokracken von Erdöleinsätzen.

**16.** Verwendung nach Anspruch 15, wobei eine Sulfierungsbehandlung des Katalysators durchgeführt wird.

**17.** Verwendung nach einem der Ansprüche 15 bis 16, wobei der Einsatz aus mindestens 80 Volumen- % Bestandteilen besteht, deren Siedepunkt mindestens 350 °C beträgt.

**18.** Verwendung nach einem der Ansprüche 15 bis 17, wobei die Temperatur größer als 200 °C ist, bei einem Druck größer als 0,1 MPa, mit einer Wasserstoffrücklaufrate größer als 50 Normalliter Wasserstoff pro Liter Einsatz und mit einer Massengeschwindigkeit pro Stunde zwischen 0,1 und 20 $h^{-1}$.

**19.** Verwendung nach einem der Ansprüche 15 bis 18 in einem Verfahren zum partiellen Hydrokracken mit einem Umwandlungsgrad kleiner als 55 %.

**20.** Verwendung nach Anspruch 19, wobei die Temperatur größer oder gleich 230 °C ist, bei einem Druck größer als 2 MPa und von höchstens 12 MPa, mit einer Wasserstoffmenge größer als 100 Nl/Nl Einsatz und mit einer Massengeschwindigkeit pro Stunde zwischen 0,15 und 10 $h^{-1}$.

**21.** Verwendung nach einem der Ansprüche 15 bis 18, wobei der Druck größer als 5 MPa ist und mit einem Umwandlungsgrad größer als 55 %.

**22.** Verwendung nach Anspruch 21, wobei die Temperatur größer oder gleich 230 °C ist, bei einem Druck größer als 5 MPa, mit einer Wasserstoffmenge größer als 100 Nl/Nl Einsatz und mit einer Massengeschwindigkeit zwischen 0,15 und 10 $h^{-1}$.

**23.** Verwendung nach einem der Ansprüche 15 bis 22, wobei ein vorheriger Schritt der Behandlung mit Wasserstoff bei einer Temperatur zwischen 350 und 460 °C durchgeführt wird, unter einem Gesamtdruck von mindestens 2 MPa, mit einer Wasserstoffmenge von mindestens 100 Nl/Nl Einsatz, mit einer Massengeschwindigkeit pro Stunde zwischen 0,1 und 5 $h^{-1}$ und in Anwesenheit eines Hydrierungskatalysators.

FIG.1

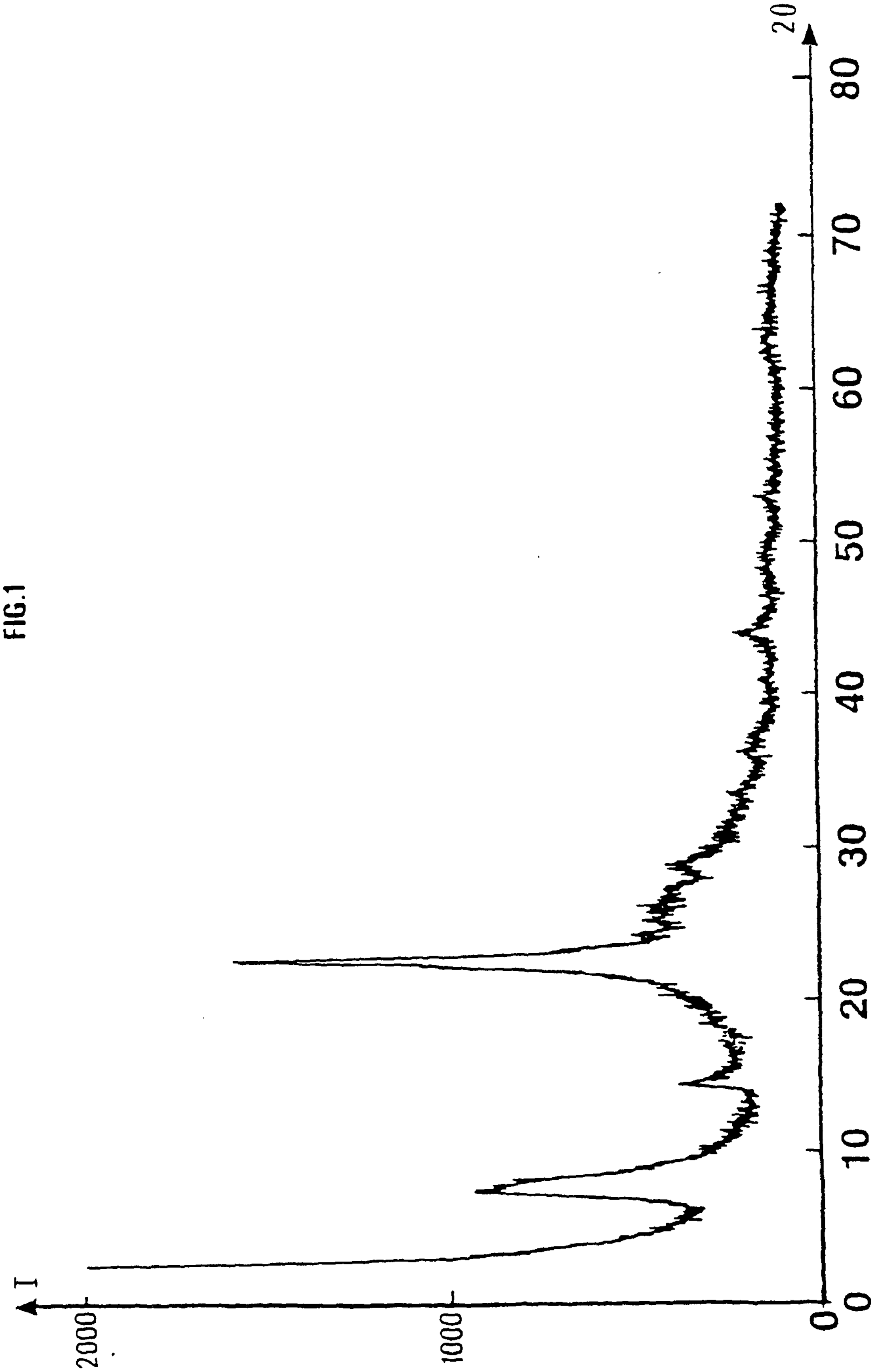

FIG.2